# EUROPEAN PATENT APPLICATION

(11) **EP 3 995 941 A1**
(43) Date of publication of application: **11.05.2022**
(21) Application number: 19936464.7
(22) Date of filing: 02.07.2019
(51) Int. Cl.: G06F 3/0481, H04N 21/431, H04N 21/485

(54) **DISPLAY DEVICE**

(71) Applicant: LG Electronics Inc., SEOUL 07336 (KR)
(72) Inventor: MOON, Sangmin, Seoul 06772 (KR); GONG, Yongtaek, Seoul 06772 (KR); YUN, Junho, Seoul 06772 (KR); HWANG, Hyesook, Seoul 06772 (KR)
(74) Representative: Mooser, Sebastian Thomas
(86) International application number: PCT/KR2019/007995
(87) International publication number: WO 2021/002494

(57) **Abstract**

A display device for controlling a pointer of a remote controller not to interfere with usability, includes a display configured to display a pointer, a user input interface (UI) configured to receive a control signal of the pointer, and a controller configured to determine whether a UI exists on a screen of the display, and to control the display not to display the pointer when the UI does not exist.

## Description

### [Technical Field]

The present disclosure relates to a display device, and more particularly, to a method of controlling a pointer displayed on a screen.

### [Background Art]

In order for users to more conveniently use these various services, display devices provide a pointer displayed according to movement of a remote controller. That is, display devices minimize user inconvenience by displaying a pointer such as a mouse cursor of a computer.

However, the pointer is displayed to overlap an image, causing a problem in that the pointer covers a portion of an image, hindering the user from watching images.

### [Disclosure]

### [Technical Problem]

An aspect of the present disclosure provides a display device having improved usability of a pointer.

Another aspect of the present disclosure provides a display device that minimizes user inconvenience due to a pointer.

Another aspect of the present disclosure provides a display device that displays a pointer only when a user needs the pointer.

### [Technical Solution]

A display device according to an embodiment of the present invention comprises a display configured to display a pointer, a user input interface configured to receive a control signal of the pointer, and a controller configured to determine whether a UI (User Interface) exists on a screen of the display, and to control the display not to display the pointer when the UI does not exist.

The controller is configured to control the display to display the pointer when the UI exists.

The controller is configured to control the display not to display the pointer when the UI exists and a time for which the pointer is displayed without movement exceeds a set time.

The controller is configured to count the time for which the pointer is displayed without movement when the UI exists.

The controller is configured to periodically determine whether the UI exists in a state in which the pointer is not displayed, and to control the display to display the pointer when the UI exists.

The controller is configured to control the display to display the pointer when a control signal of the pointer is received in a state in which the pointer is not displayed because the UI does not exist.

The controller is configured to control the display to selectively display the pointer according to whether the UI exists while an input image is being produced.

The controller is configured to control the display to display the pointer when reproducing of the input image is stopped in a state in which the UI does not exists so the pointer is not displayed, while the input image is being reproduced.

The controller is configured to acquire a first image obtained by capturing a video region and a second image obtained by capturing a screen of the display and to acquire whether the UI exists based on a result of comparing the first image and the second image.

The controller is configured to determine that the UI does not exist when the first image and the second image are the same, and to determine that the UI exists when the first image and the second image are different.

The controller is configured to extract data of an OSD signal generated to be displayed on the display and to acquire whether the UI exists based on the OSD signal.

The controller is configured to determine that the UI does not exist when data of all pixels in the OSD signal has a transparent value, and to determine that the UI exists when data of at least one of the pixels in the OSD signal does not have a transparent value.

The controller is configured to acquire a render tree, to extract data of a GUI region from the render tree, and to acquire whether the UI exists based on the data of the GUI region.

The controller is configured to determine that the UI does not exist when opaque data is not present in the data of the GUI region, and to determine that the UI exists when opaque data is present in the data of the GUI region.

The controller is configured to acquire the render tree when a web application is run, and to acquire whether the UI exists based on the render tree.

### [Advantageous Effect]

According to an embodiment of the present disclosure, when it is determined that the user does not need to use the pointer, the pointer is not displayed, thereby minimizing a case where the pointer covers an image, thereby minimizing user inconvenience due to the pointer.

In addition, when it is determined that the user needs to use the pointer, the pointer is displayed, thereby increasing usability of the pointer.

In addition, by determining whether the user needs a pointer according to the presence or absence of a user interface (UI), whether the user needs a pointer may be determined accurately in a simpler manner.

### [Description of Drawings]

FIG. 1 is a diagram illustrating a display device according to an embodiment of the present disclosure.
FIG. 2 is an example of a block diagram of the inside of the display device in FIG. 1.
FIG. 3 is an example of a block diagram of the inside of a controller in FIG. 2.
FIG. 4A is a diagram illustrating a method in which the remote controller in FIG. 2 performs control.
FIG. 4B is a block diagram of the inside of the remote controller in FIG. 2.
FIG. 5 is a block diagram of the inside of the display in FIG. 2.
FIG. 6 is a flowchart illustrating a method of operating a display device according to an embodiment of the present disclosure.
FIG. 7 is an exemplary view illustrating an example of a method of operating a display device according to the presence or absence of a UI according to an embodiment of the present disclosure.
FIG. 8 is an exemplary view illustrating another example of a method of operating a display device according to the presence or absence of a UI according to an embodiment of the present disclosure.
FIG. 9 is an exemplary diagram illustrating another example of a method of operating a display device according to the presence or absence of a UI according to an embodiment of the present disclosure.
FIG. 10 is a flowchart illustrating a method of analyzing whether a UI exists by the display device according to the first embodiment of the present disclosure.
FIGS. 11A to 11B are exemplary views illustrating a method of comparing the first image and the second image by the display device according to an embodiment of the present disclosure.
FIG. 12 is a flowchart illustrating a method of analyzing whether a UI exists by a display device according to a second embodiment of the present disclosure.
FIG. 13 is a flowchart illustrating a method of analyzing whether a UI exists by a display device according to a third embodiment of the present disclosure.
FIG. 14 is a block diagram illustrating a method for expressing a web page through HTML by a display device according to an embodiment of the present disclosure.

### [Mode for Invention]

Hereinafter, the present invention will be described in detail with reference to the drawings.

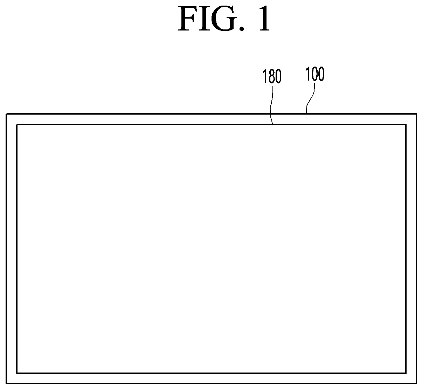

FIG. 1 is a diagram illustrating a display device according to an embodiment of the present disclosure.

With reference to the drawings, a display device 100 includes a display 180.

On the other hand, the display 180 is realized by one among various panels. For example, the display 180 is one of the following panels: a liquid crystal display panel (LCD panel), an organic light-emitting diode (OLED) panel (OLED panel), and an inorganic light-emitting diode panel (ILED panel).

According to the present disclosure, the display 180 is assumed to include an organic light-emitting diode (OLED) panel.

On the other hand, examples of the display device 100 in FIG. 1 include a monitor, a TV, a tablet PC, a mobile terminal, and so on.

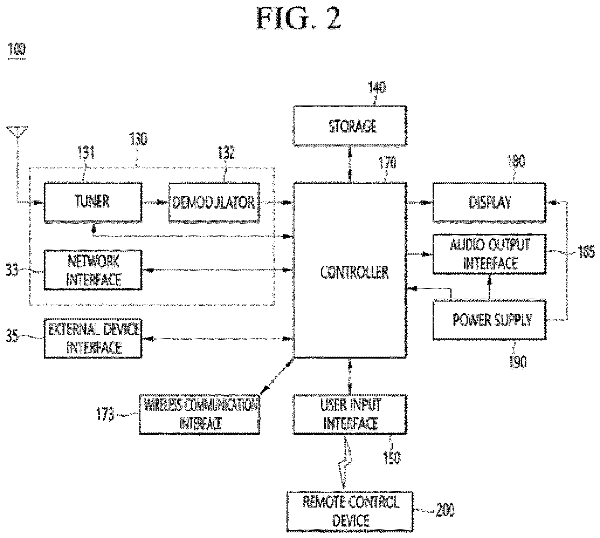

FIG. 2 is an example of a block diagram of the inside of the display device in FIG. 1.

With reference to FIG. 2, a display device 100 can include a broadcast reception module 130, an external device interface 135, a storage 140, a user input interface 150, a controller 170, a wireless communication interface 173, a display 180, an audio output interface 185, and a power supply 190.

The broadcast reception module 130 can include a tuner 131, a demodulator 132, and a network interface 133.

The tuner 131 can select a specific broadcast channel according to a channel selection command. The tuner 131 can receive broadcast signals for the selected specific broadcast channel.

The demodulator 132 can divide the received broadcast signals into video signals, audio signals, and broadcast program related data signals and restore the divided video signals, audio signals, and data signals to an output available form.

The network interface 133 can provide an interface for connecting the display device 100 to a wired/wireless network including internet network. The network interface 133 can transmit or receive data to or from another user or another electronic device through an accessed network or another network linked to the accessed network.

The network interface 133 can access a predetermined webpage through an accessed network or another network linked to the accessed network. That is, it can transmit or receive data to or from a corresponding server by accessing a predetermined webpage through network.

Then, the network interface 133 can receive contents or data provided from a content provider or a network operator. That is, the network interface 133 can receive contents such as movies, advertisements, games, VODs, and broadcast signals, which are provided from a content provider or a network provider, through network and information relating thereto.

Additionally, the network interface 133 can receive firmware update information and update files provided from a network operator and transmit data to an internet or content provider or a network operator.

The network interface 133 can select and receive a desired application among applications open to the air, through network.

The external device interface 135 can receive an application or an application list in an adjacent external device and deliver it to the controller 170 or the storage 140.

The external device interface 135 can provide a connection path between the display device 100 and an external device. The external device interface 135 can receive at least one of image and audio outputted from an external device that is wirelessly or wiredly connected to the display device 100 and deliver it to the controller. The external device interface 135 can include a plurality of external input terminals. The plurality of external input terminals can include an RGB terminal, at least one High Definition Multimedia Interface (HDMI) terminal, and a component terminal.

An image signal of an external device inputted through the external device interface 135 can be outputted through the display 180. A sound signal of an external device inputted through the external device interface 135 can be outputted through the audio output interface 185.

An external device connectable to the external device interface 135 can be one of a set-top box, a Blu-ray player, a DVD player, a game console, a sound bar, a smartphone, a PC, a USB Memory, and a home theater system but this is just exemplary.

Additionally, some content data stored in the display device 100 can be transmitted to a user or an electronic device, which is selected from other users or other electronic devices pre-registered in the display device 100.

The storage 140 can store signal-processed image, voice, or data signals stored by a program in order for each signal processing and control in the controller 170.

Additionally, the storage 140 can perform a function for temporarily store image, voice, or data signals outputted from the external device interface 135 or the network interface 133 and can store information on a predetermined image through a channel memory function.

The storage 140 can store an application or an application list inputted from the external device interface 135 or the network interface 133.

The display device 100 can play content files (for example, video files, still image files, music files, document files, application files, and so on) stored in the storage 140 and provide them to a user.

The user input interface 150 can deliver signals inputted from a user to the controller 170 or deliver signals from the controller 170 to a user. For example, the user input interface 150 can receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR.

Additionally, the user input interface 150 can deliver, to the controller 170, control signals inputted from local keys (not shown) such as a power key, a channel key, a volume key, and a setting key.

Image signals that are image-processed in the controller 170 can be inputted to the display 180 and displayed as an image corresponding to corresponding image signals. Additionally, image signals that are image-processed in the controller 170 can be inputted to an external output device through the external device interface 135.

Voice signals processed in the controller 170 can be outputted to the audio output interface 185. Additionally, voice signals processed in the controller 170 can be inputted to an external output device through the external device interface 135.

Besides that, the controller 170 can control overall operations in the display device 100.

Additionally, the controller 170 can control the display device 100 by a user command or internal program inputted through the user input interface 150 and download a desired application or application list into the display device 100 in access to network.

The controller 170 can output channel information selected by a user together with processed image or voice signals through the display 180 or the audio output interface 185.

Additionally, according to an external device image playback command received through the user input interface 150, the controller 170 can output image signals or voice signals of an external device such as a camera or a camcorder, which are inputted through the external device interface 135, through the display 180 or the audio output interface 185.

Moreover, the controller 170 can control the display 180 to display images and control broadcast images inputted through the tuner 131, external input images inputted through the external device interface 135, images inputted through the network interface, or images stored in the storage 140 to be displayed on the display 180. In this case, an image displayed on the display 180 can be a still image or video and also can be a 2D image or a 3D image.

Additionally, the controller 170 can play content stored in the display device 100, received broadcast content, and external input content inputted from the outside, and the content can be in various formats such as broadcast images, external input images, audio files, still images, accessed web screens, and document files.

Moreover, the wireless communication interface 173 can perform a wired or wireless communication with an external electronic device. The wireless communication interface 173 can perform short-range communication with an external device. For this, the wireless communication interface 173 can support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 can support wireless communication between the display device 100 and a wireless communication system, between the display device 100 and another display device 100, or between networks including the display device 100 and another display device 100 (or an external server) through wireless area networks. The wireless area networks can be wireless personal area networks.

Herein, the other display device 100 can be a mobile terminal such as a wearable device (for example, a smart watch, a smart glass, and a head mounted display (HMD)) or a smartphone, which is capable of exchanging data (or inter-working) with the display device 100. The wireless communication interface 173 can detect (or recognize) a communicable wearable device around the display device 100. Furthermore, if the detected wearable device is a device authenticated to communicate with the display device 100, the controller 170 can transmit at least part of data processed in the display device 100 to the wearable device through the wireless communication interface 173. Accordingly, a user of the wearable device can use the data processed in the display device 100 through the wearable device.

The display 180 can convert image signals, data signals, or OSD signals, which are processed in the controller 170, or images signals or data signals, which are received in the external device interface 135, into R, G, and B signals to generate driving signals.

Furthermore, the display device 100 shown in Fig. 2 is just one embodiment of the present disclosure and thus, some of the components shown can be integrated, added, or omitted according to the specification of the actually implemented display device 100.

That is, if necessary, two or more components can be integrated into one component or one component can be divided into two or more components and configured. Additionally, a function performed by each block is to describe an embodiment of the present disclosure and its specific operation or device does not limit the scope of the present disclosure.

According to another embodiment of the present disclosure, unlike Fig. 2, the display device 100 can receive images through the network interface 133 or the external device interface 135 and play them without including the tuner 131 and the demodulator 132.

For example, the display device 100 can be divided into an image processing device such as a set-top box for receiving broadcast signals or contents according to various network services and a content playback device for playing contents inputted from the image processing device.

In this case, an operating method of a display device according to an embodiment of the present disclosure described below can be performed by one of the display device described with reference to Fig. 1, an image processing device such as the separated set-top box, and a content playback device including the display 180 and the audio output interface 185.

The audio output interface 185 receives the audio processed signal from the controller 170 and outputs the sound.

The power supply 190 supplies the corresponding power throughout the display device 100. In particular, the power supply 190 supplies power to the controller 170 that can be implemented in the form of a System On Chip (SOC), a display 180 for displaying an image, and the audio output interface 185 for outputting audio or the like.

Specifically, the power supply 190 may include a converter for converting an AC power source into a DC power source, and a DC/DC converter for converting a level of the DC source power.

The remote controller 200 transmits a user input to the user input interface 150. To do this, the remote controller 200 employs Bluetooth, radio frequency (RF) communication, infrared (IR) communication, ultra-wideband (UWB), a ZigBee specification, and so on. In addition, the remote controller 200 receives an image signal, an audio signal, or a data signal output from the user input interface 150, and displays the received signal on a display unit of the remote controller 200 or outputs the received signal, as audio, to an output unit of the remote controller 200.

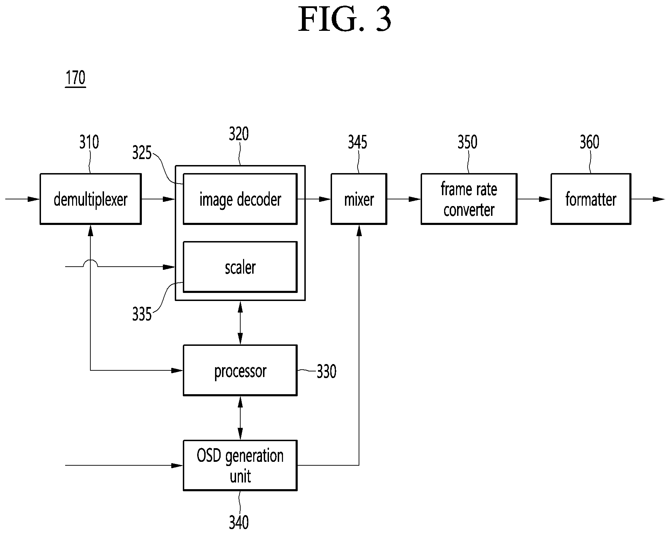

FIG. 3 is an example of a block diagram of the inside of a controller in FIG. 2.

For description with reference to the drawings, the controller 170 according to an embodiment of the present disclosure includes a demultiplexer 310, an image processing unit 320, a processor 330, an OSD generation unit 340, a mixer 345, a frame rate converter 350, and a formatter 360. In addition, an audio processing unit (not illustrated) and a data processing unit (not illustrated) are further included.

The demultiplexer 310 demultiplexes a stream input. For example, in a case where an MPEG-2 TS is input, the MPEG-2 TS is demultiplexed into an image signal, an audio signal, and a data signal. At this point, a stream signal input into the demultiplexer 310 is a stream signal output from the tuner 131, the demodulator 132, or the external device interface 135.

The image processing unit 320 performs image processing of the image signal that results from the demultiplexing. To do this, the image processing unit 320 includes an image decoder 325 or a scaler 335.

The image decoder 325 decodes the image signal that results from the demultiplexing. The scaler 335 performs scaling in such a manner that a resolution of an image signal which results from the decoding is such that the image signal is possibly output to the display 180.

Examples of the image decoder 325 possibly include decoders in compliance with various specifications. For example, the examples of the image decoder 325 include a decoder for MPEG-2, a decoder for H.264, a 3D image decoder for a color image and a depth image, a decoder for a multi-point image, and so on.

The processor 330 controls an overall operation within the display device 100 or within the controller 170. For example, the processor 330 controls the tuner unit 110 in such a manner that the tuner unit 110 performs the selection of (tuning to) the RF broadcast that corresponds to the channel selected by the user or the channel already stored.

In addition, the processor 330 controls the display device 100 using the user command input through the user input interface 150, or the internal program.

In addition, the processor 330 performs control of transfer of data to and from the network interface 133 or the external device interface 135.

In addition, the processor 330 controls operation of each of the demultiplexer 310, the image processing unit 320, the OSD generation unit 340, and so on within the controller 170.

The OSD generation unit 340 generates an OSD signal, according to the user input or by itself. For example, based on the user input signal, a signal is generated for displaying various pieces of information in a graphic or text format on a screen of the display 180. The OSD signal generated includes various pieces of data for a user interface screen of the display device 100, various menu screens, a widget, an icon, and so on. In addition, the OSD generated signal includes a 2D object or a 3D object.

In addition, based on a pointing signal input from the remote controller 200, the OSD generation unit 340 generates a pointer possibly displayed on the display. Particularly, the pointer is generated in a pointing signal processing unit, and an OSD generation unit 340 includes the pointing signal processing unit (not illustrated). Of course, it is also possible that instead of being providing within the OSD generation unit 340, the pointing signal processing unit (not illustrated) is provided separately.

The mixer 345 mixes the OSD signal generated in the OSD generation unit 340, and the image signal that results from the image processing and the decoding in the image processing unit 320. An image signal that results from the mixing is provided to the frame rate converter 350.

The frame rate converter (FRC) 350 converts a frame rate of an image input. On the other hand, it is also possible that the frame rate converter 350 outputs the image, as is, without separately converting the frame rate thereof.

On the other hand, the formatter 360 converts a format of the image signal input, into a format for an image signal to be displayed on the display, and outputs an image that results from the conversion of the format thereof.

The formatter 360 changes the format of the image signal. For example, a format of a 3D image signal is changed to any one of the following various 3D formats: a side-by-side format, a top and down format, a frame sequential format, an interlaced format, and a checker box format.

On the other hand, the audio processing unit (not illustrated) within the controller 170 performs audio processing of an audio signal that results from the demultiplexing. To do this, the audio processing unit (not illustrated) includes various decoders.

In addition, the audio processing unit (not illustrated) within the controller 170 performs processing for base, treble, volume adjustment and so on.

The data processing unit (not illustrated) within the controller 170 performs data processing of a data signal that results from the demultiplexing. For example, in a case where a data signal that results from the demultiplexing is a data signal the results from coding, the data signal is decoded. The data signal that results from the coding is an electronic program guide that includes pieces of broadcast information, such as a starting time and an ending time for a broadcast program that will be telecast in each channel.

On the other hand, a block diagram of the controller 170 illustrated in FIG. 3 is a block diagram for an embodiment of the present disclosure. Each constituent element in the block diagram is subject to integration, addition, or omission according to specifications of the image display controller 170 actually realized.

Particularly, the frame rate converter 350 and the formatter 360 may be provided separately independently of each other or may be separately provided as one module, without being provided within the controller 170.

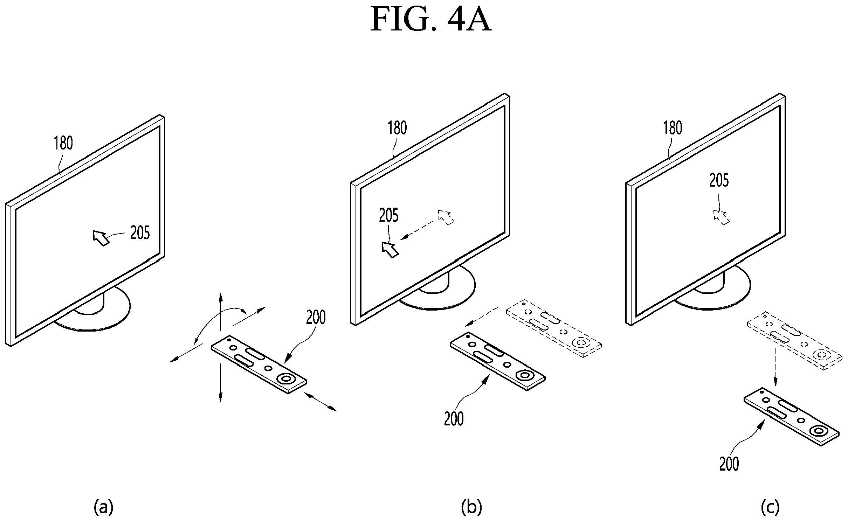

FIG. 4A is a diagram illustrating a method in which the remote controller in FIG. 2 performs control.

In FIG. 4A(a), it is illustrated that a pointer 205 which corresponds to the remote controller 200 is displayed on the display 180.

The user moves or rotates the remote controller 200 upward and downward, leftward and rightward (FIG. 4A(b)), and forward and backward (FIG. 4A(c)). The pointer 205 displayed on the display 180 of the display device corresponds to movement of the remote controller 200. As in the drawings, movement of the pointer 205, which depends on the movement of the remote controller 200 in a 3D space, is displayed and thus, the remote controller 200 is named a spatial remote controller or a 3D pointing device.

FIG. 4A(b) illustrates that, when the user moves the remote controller 200 leftward, the pointer 205 displayed on the display 180 of the display device correspondingly moves leftward.

Information on the movement of the remote controller 200, which is detected through a sensor of the remote controller 200, is transferred to the display device. The display device calculates the information on the movement of the remote controller 200 from coordinates of the pointer 205. The display device displays the pointer 205 in such a manner that the pointer 25 corresponds to the calculated coordinates.

FIG. 4A(c) illustrates a case where the user moves the remote controller 200 away from the display 180 in a state where a specific button within the remote controller 200 is held down. Accordingly, a selection area within the display 180, which corresponds to the pointer 205, is zoomed in so that the selection area is displayed in an enlarged manner. Conversely, in a case where the user causes the remote controller 200 to approach the display 180, the selection area within the display 180, which corresponds to the pointer 205, is zoomed out so that the selection is displayed in a reduced manner. On the other hand, in a case where the remote controller 200 moves away from the display 180, the selection area may be zoomed out, and in a case where the remote controller 200 approaches the display 180, the selection area may be zoomed in.

On the other hand, an upward or downward movement, or a leftward or rightward movement is not recognized in a state where a specific button within the remote controller 200 is held down. That is, in a case where the remote controller 200 moves away from or approaches the display 180, only a forward or backward movement is set to be recognized without the upward or downward movement, or the leftward or rightward movement being recognized. Only the pointer 205 moves as the remote controller 200 moves upward, downward, leftward, or rightward, in a state where a specific button within the remote controller 200 is not held down.

On the other hand, a moving speed or a moving direction of the pointer 205 corresponds to a moving speed or a moving direction of the remote controller 200, respectively.

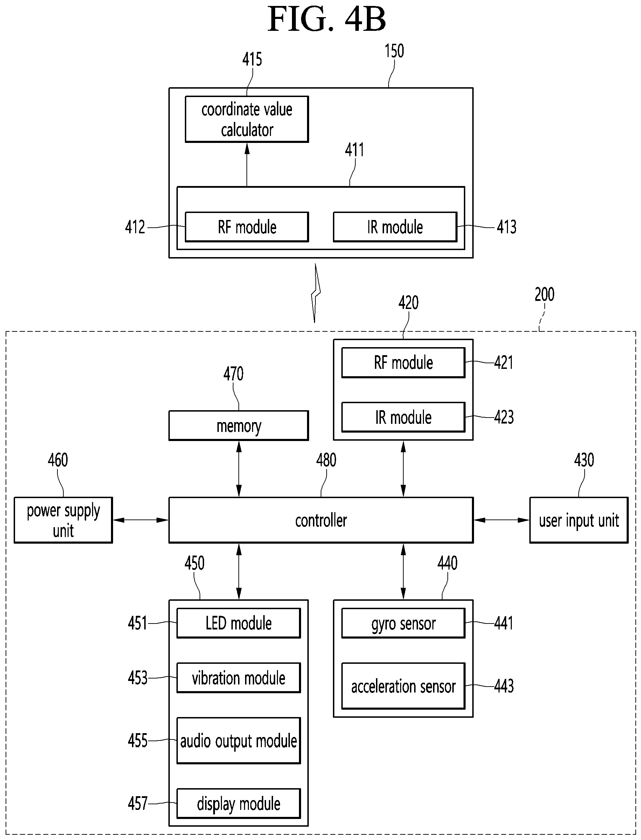

FIG. 4B is a block diagram of the inside of the remote controller in FIG. 2.

For description with reference to the drawings, the remote controller 200 includes a wireless communication unit 420, a user input unit 430, a sensor unit 440, an output unit 450, a power supply unit 460, a memory 470, and a controller 480.

The wireless communication unit 420 transmits and receives a signal to and from an arbitrary one of the display devices according to the embodiments of the present disclosure, which are described above. Of the display devices according to the embodiments of the present disclosure, one display device is taken as an example for description.

According to the present embodiment, the remote controller 200 includes an RF module 421 that transmits and receives a signal to and from the display device 100 in compliance with RF communication standards. In addition, the remote controller 200 includes an IR module 423 that possibly transmits and receives a signal to and from the display device 100 in compliance with IR communication standards.

According to the present embodiment, the remote controller 200 transfers a signal containing information on the movement of the remote controller 200 to the display device 100 through the RF module 421.

In addition, the remote controller 200 receives a signal transferred by the display device 100, through the RF module 421. In addition, the remote controller 200 transfers a command relating to power-on, power-off, a channel change, or a volume change, to the display device 100, through the IR module 423, whenever needed.

The user input unit 430 is configured with a keypad, buttons, a touch pad, a touch screen, or so on. The user inputs a command associated with the display device 100 into the remote controller 200 by operating the user input unit 430. In a case where the user input unit 430 is equipped with a physical button, the user inputs the command associated with the display device 100 into the remote controller 200 by performing an operation of pushing down the physical button. In a case where the user input unit 430 is equipped with a touch screen, the user inputs the command associated with the display device 100 into the remote controller 200 by touching on a virtual key of the touch screen. In addition, the user input unit 430 may be equipped with various types of input means operated by the user, such as a scroll key or a jog key, and the present embodiment does not impose any limitation on the scope of the present disclosure.

The sensor unit 440 includes a gyro sensor 441 or an acceleration sensor 443. The gyro sensor 441 senses information on the movement of the remote controller 200.

As an example, the gyro sensor 441 senses the information on operation of the remote controller 200 on the x-, y-, and z-axis basis. The acceleration sensor 443 senses information on the moving speed and so on of the remote controller 200. On the other hand, a distance measurement sensor is further included. Accordingly, a distance to the display 180 is sensed.

The output unit 450 outputs an image or an audio signal that corresponds to the operating of the user input unit 430 or corresponds to a signal transferred by the display device 100. Through the output unit 450, the user recognizes whether or not the user input unit 430 is operated or whether or not the display device 100 is controlled.

As an example, the output unit 450 includes an LED module 451, a vibration module 453, an audio output module 455, or a display module 457. The LED module 451, the vibration module 453, the audio output module 455, and the display module 457 emits light, generates vibration, outputs audio, or outputs an image, respectively, when the input unit 435 is operated, or a signal is transmitted and received to and from the display device 100 through a wireless communication unit 420.

The power supply unit 460 supplies a power to the remote controller 200. In a case where the remote controller 200 does not move for a predetermined time, the power supply unit 460 reduces power consumption by interrupting power supply. In a case where a predetermined key provided on the remote controller 200 is operated, the power supply unit 460 resumes the power supply.

Various types of programs, pieces of application data, and so on that are necessary for control or operation of the remote controller 200 are stored in the memory 470. In a case where the remote controller 200 transmits and receives a signal to and from the display device 100 in a wireless manner through the RF module 421, the signal is transmitted and received in a predetermined frequency band between the remote controller 200 and the display device 100. The controller 480 of the remote controller 200 stores information on, for example, a frequency band in which data is transmitted and received in a wireless manner to and from the display device 100 paired with the remote controller 200, in the memory 470, and makes a reference to the stored information.

The controller 480 controls all operations associated with the control by the remote controller 200. The controller 480 transfers a signal that corresponds to operating of a predetermined key of the user input unit 430, or a signal that corresponds to the movement of the remote controller 200, which is sensed in the sensor unit 440, to the display device 100 through the wireless communication unit 420.

A user input interface 150 of the display device 100 includes a wireless communication unit 411 that transmits and receives a signal in a wireless manner to and from the remote controller 200, and a coordinate value calculator 415 that calculates a coordinate value of the pointer, which corresponds to the operation of the remote controller 200.

The user input interface 150 transmits and receives the signal in a wireless manner to and from the remote controller 200 through the RF module 412. In addition, a signal transferred in compliance with the IR communication standards by the remote controller 200 through the IR module 413 is received.

The coordinate value calculator 415 calculates a coordinate value (x, y) of the pointer 205 to be displayed on the display 180, which results from compensating for a hand movement or an error, from a signal that corresponds to the operation of the remote controller 200, which is received through the wireless communication unit 411.

A transfer signal of the remote controller 200, which is input into the display device 100 through the user input interface 150 is transferred to the controller 170 of the display device 100. The controller 170 determines information on the operation of the remote controller 200 and information on operating of a key, from the signal transferred by the remote controller 200, and correspondingly controls the display device 100.

As another example, the remote controller 200 calculates a coordinate value of a pointer, which corresponds to the operation of the remote controller 200, and outputs the calculated value to the user input interface 150 of the display device 100. In this case, the user input interface 150 of the display device 100 transfers information on the received coordinate values of the pointer, to the controller 170, without performing a process of compensating for the hand movement and the error.

In addition, as another example, unlike in the drawings, it is also possible that the coordinate value calculator 415 is included within the controller 170 instead of the user input interface 150.

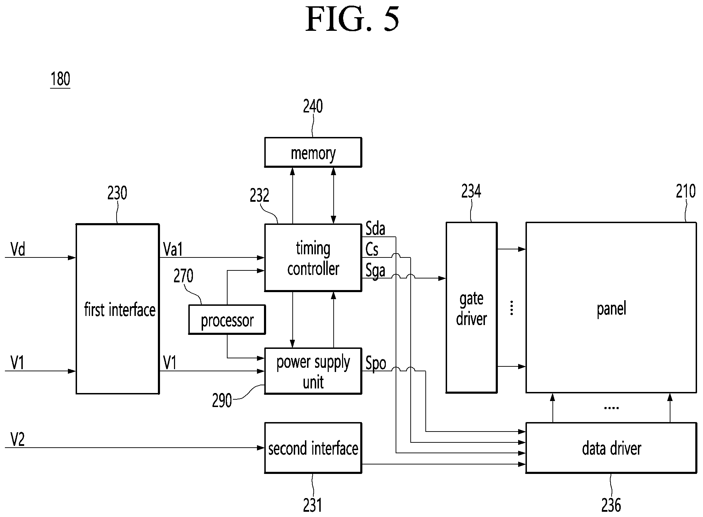

FIG. 5 is a block diagram of the inside of the display in FIG. 2.

With reference with the drawings, the display 180 based on the organic light-emitting diode may include the OLED panel 210, a first interface 230, a second interface 231, a timing controller 232, a gate driver 234, a data driver 236, a memory 240, a processor 270, a power supply unit 290, and so on.

The display 180 receives an image signal Vd, a first direct current power VI, and a second direct current power V2. Based on the image signal Vd, the display 180 display a predetermined image is displayed.

On the other hand, the first interface 230 within the display 180 receives the image signal Vd and the first direct current power V1 from the controller 170.

At this point, the first direct current power V1 is used for operation for each of the power supply unit 290 and the timing controller 232 within the display 180.

Next, the second interface 231 receives the second direct current power V2 from the external power supply unit 190. On the other hand, the second direct current power V2 is input into the data driver 236 within the display 180.

Based on the image signal Vd, the timing controller 232 outputs a data drive signal Sda and a gate drive signal Sga.

For example, in a case where the first interface 230 converts the image signal Vd input, and outputs image signal va1 that results from the conversion, the timing controller 232 outputs the data drive signal Sda and the gate drive signal Sga based on the image signal va1 that results from the conversion.

The timing controller 232 further receives a control signal, the vertical synchronization signal Vsync, and so on, in addition to a video signal Vd from the controller 170.

The timing controller 232 outputs the gate drive signal Sga for operation of the gate driver 234 and the data drive signal Sda for operation of the data driver 236, based on the control signal, the vertical synchronization signal Vsync, and so on in addition to the video signal Vd.

In a case where the OLED panel 210 includes a subpixel for RGBW, the data drive signal Sda at this time is a data drive signal for a subpixel for RGBW.

On the other hand, the timing controller 232 further outputs a control signal Cs to the gate driver 234.

The gate driver 234 and the data driver 236 supplies a scanning signal and an image signal to the OLED panel 210 through a gate line GL and a data line DL according to the gate drive signal Sga and the data drive signal Sda, respectively, from the timing controller 232. Accordingly, a predetermined image is displayed on the OLED panel 210.

On the other hand, the OLED panel 210 includes an organic light-emitting layer. In order to display an image, many gate lines GL and many data lines DL are arranged to intersect each other in a matrix form, at each pixel that corresponds to the organic light-emitting layer.

On the other hand, the data driver 236 outputs a data signal to the OLED panel 210 based on the second direct current power V2 from the second interface 231.

The power supply unit 290 supplies various types of powers to the gate driver 234, the data driver 236, the timing controller 232, and so on.

The processor 270 performs various types of control within the display 180. For example, the gate driver 234, the data driver 236, the timing controller 232, and so on are controlled.

The display 180 may display an input image. The controller 170 may receive an image from the broadcast reception module 130 or the external device interface 135, and may control the display 180 to display the received image.

Also, the display 180 may display a user interface (UI). The user interface (UI) is information displayed to receive an input or command from a user and may be in the form of graphic or text. For example, the user interface may be a menu, widget, icon, or the like.

The display 180 may not display a user interface, display only one user interface, or display two or more user interfaces. The number of user interfaces displayed on the screen of the display 180 may vary. Also, the location of the user interface displayed on the screen of the display 180 may vary.

Also, the display 180 may display the pointer 205 moving together with the movement of the remote controller 200.

The controller 170 may control the display 180 so that only one of the input image, the user interface, and the pointer 205 is displayed or at least two or more of the input image, the user interface, and the pointer 205 are displayed at the same time on the screen of the display 180. At this time, if the pointer 205 is displayed to overlap the input image, the user may not be able to see a portion of the image. Accordingly, the display device 100 according to an embodiment of the present disclosure intends to minimize interference on user's viewing due to the pointer 205.

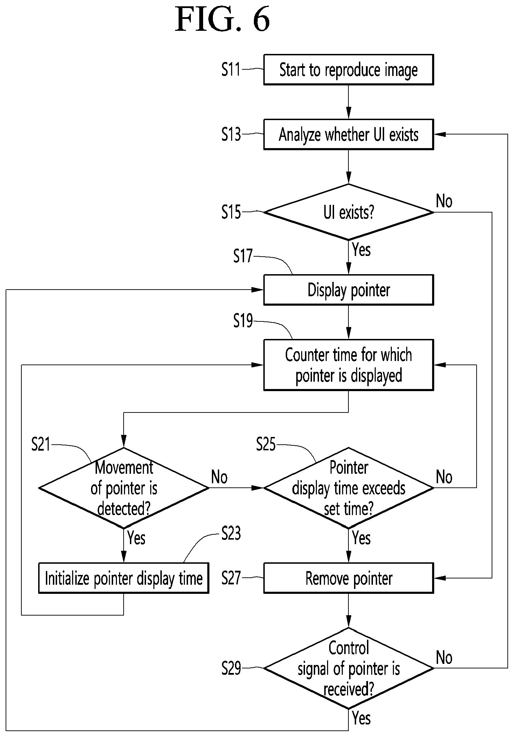

FIG. 6 is a flowchart illustrating a method of operating a display device according to an embodiment of the present disclosure.

The controller 170 may start to reproduce an image (S11).

According to an embodiment, the controller 170 may operate according to the flowchart shown in FIG. 6 only when image reproduction is started. That is, the controller 170 may minimize interference on user's viewing the image due to the pointer 205 by performing the steps described below only when the image is being reproduced.

In this case, the controller 170 may control the display unit 180 to display the pointer 205 when reproducing of an input image is stopped in a state in which there is no user interface and the pointer 205 is not displayed during reproducing of the input image.

According to another embodiment, the controller 170 may operate according to the flowchart shown in FIG. 6 irrespective of whether an image is reproduced. That is, the controller 170 may perform the operations described hereinafter even when no image is being reproduced, as well as in a case in which an image is reproduced, thereby minimizing user inconvenience due to the pointer 205.

That is, in the following description, the controller 170 controls the display 180 to selectively display the pointer 205 according to the presence or absence of the user interface (UI) while the input image is being reproduced, but this is only given as an example for convenience of explanation. That is, the present disclosure is not limited to whether or not an image is reproduced.

The controller 170 may analyze whether a user interface (UI) exists (S13).

The controller 170 may analyze whether a UI exists on the screen of the display 180.

The UI refers to information displayed to receive an input or command from the user. The UI may be expressed in a graphic or text format and may include a menu, a widget, an icon, and the like. The UI is displayed on the input image in an overlapping manner, and the OSD generation unit 340 may generate an OSD signal for displaying the UI.

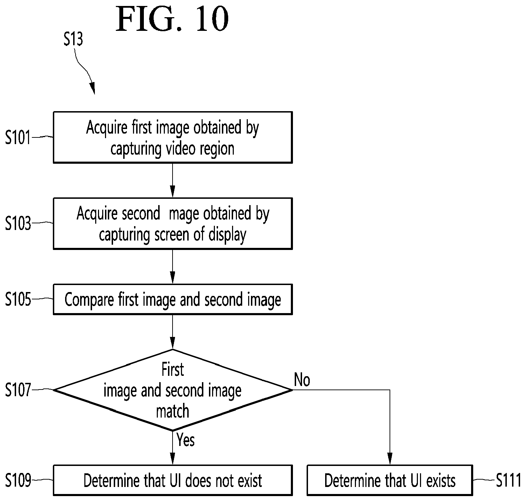

The controller 170 may acquire whether the UI exists using a method such as analyzing a screen displayed on the display 180, analyzing pixel data, or analyzing a render tree. Details thereof will be described in detail with reference to FIGS. 10, 12 and 13.

The controller 170 may determine whether the UI exists based on a result of analyzing the presence of the UI (S15).

The controller 170 may determine whether a UI exists on the screen of the display 180. Here, the screen of the display 180 may refer to the entire surface on which an image is displayed by driving the display 180.

If the UI does not exist, the controller 170 may remove the pointer 205 (S27)

That is, if the UI does not exist, the controller 170 may control the display 180 not to display the pointer 205. In this case, since the pointer 205 may immediately appear as image reproducing starts, the problem of disturbing the user viewing an image may be minimized.

Also, if the UI exists, the controller 170 may display the pointer 205 (S17).

That is, when the UI exists, the controller 170 may control the display 180 to display the pointer 205.

As described above, the controller 170 removes the pointer 205 when the UI does not exist, and displays the pointer 205 when the UI exists, so that the pointer 205 may be displayed only when the user needs it. That is, the controller 170 may remove the pointer 205 at a time at which the user does not need the pointer 205, thereby minimizing display of the unnecessary pointer 205 to minimize user inconvenience due to the pointer 205.

Meanwhile, even when a UI exists, the controller 170 may predict a time at which the user does not need the pointer 205 and remove the pointer 205, thereby minimizing user inconvenience.

The controller 170 may count a pointer display time, while the pointer 205 is being displayed (S19).

The display device 100 may further include a timer (not shown) for counting the pointer display time. The controller 170 may count a time for which the pointer 205 is displayed using a timer (not shown).

The controller 170 may count a time for which the pointer 205 is continuously displayed. In particular, the controller 170 may count a time for which the pointer 205 is displayed without movement. This is because it may be predicted that the user does not use the pointer 205 when the pointer 205 does not move for a predetermined time or more.

The controller 170 may detect movement of the pointer 205 (S21)..

The controller 170 may detect whether the pointer 205 moves on the screen. According to an embodiment, the controller 170 may detect whether the pointer 205 moves through screen analysis of the display 180. According to another embodiment, the controller 170 may detect whether the pointer 205 moves based on whether a signal is input from the remote controller 200 through the user input interface 150. However, this is only an example, and the controller 170 may detect whether the pointer 205 moves in various ways.

When movement of the pointer 205 is detected, the controller 170 may initialize the pointer display time (S23).

When movement of the pointer 205 is detected, the controller 170 may determine that the user may use the pointer 205. Accordingly, in this case, the controller 170 may initialize the pointer display time. For example, after counting up to 3 seconds as a time for which the pointer is displayed in a stopped state, when movement of the pointer 205 is detected, the controller 170 may initialize the pointer display time to 0 seconds.

If the controller 170 does not detect movement of the pointer 205, the controller 170 may determine whether the pointer display time exceeds a set time (S25).

The set time may be a time previously set by the user as a reference for determining that the pointer 205 is not in use. For example, the set time may be 1 minute, but this is only an example, and thus is not limited thereto.

When the controller 170 does not detect movement of the pointer 205, the controller 170 may acquire whether the set time of the pointer display time has elapsed.

The controller 170 may continuously count the pointer display time when the pointer display time does not exceed the set time.

The controller 170 may remove the pointer 205 when the pointer display time exceeds the set time (S27).

That is, even when a UI exists, if a time for which the pointer 205 is displayed without movement exceeds the set time, the controller 170 may control the display 180 not to display the pointer 205. To this end, when the UI exists, the controller 170 may count a time for which the pointer 205 is displayed without movement.

The controller 170 may remove the pointer 205 and determine whether a control signal of the pointer 205 is received (S29).

The controller 170 may determine whether a control signal of the pointer 205 is received from the remote controller 200, while controlling the display 180 not to display the pointer 205.

The control signal of the pointer 205 may be a signal input to the user input interface 150 when the remote controller 200 moves or when at least one button provided in the remote controller 200 is selected.

When receiving the control signal of the pointer 205, the controller 170 may control the display 180 to display the pointer 205.

The controller 170 may control the display 180 to display the pointer 205 when the control signal of the pointer 205 is received in a state in which the pointer 205 is not displayed because the UI does not exist. Alternatively, the controller 170 may control the display 180 to display the pointer 205 when the control signal of the pointer 205 is received, even in a state in which the pointer 205 is not displayed because the pointer 205 does not move for the set time although the UI exists.

Meanwhile, when the control signal of the pointer 205 is not received, the controller 170 may determine whether a UI exists. That is, the controller 170 may periodically determine whether a UI exists in a state in which the pointer 205 is not displayed, and control the display 180 to display the pointer 205 when the UI exists.

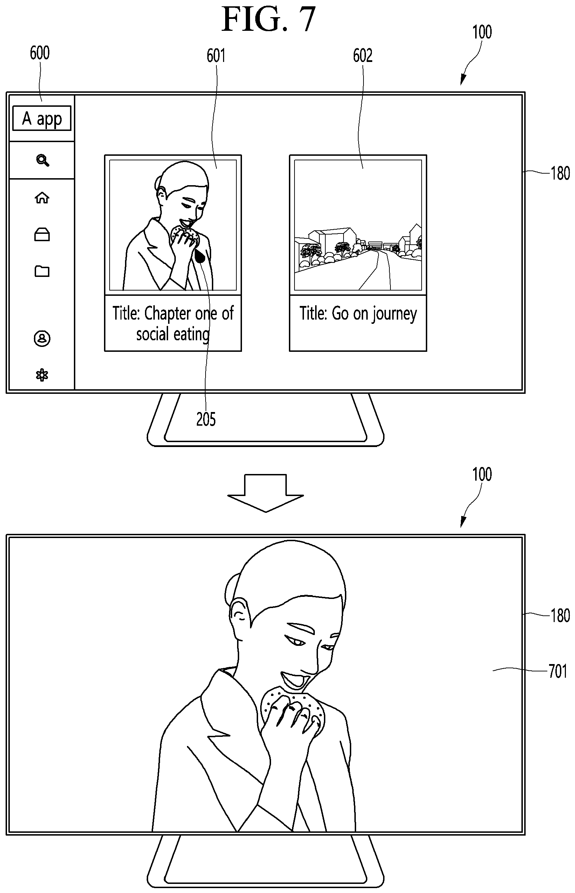

FIG. 7 is an exemplary view illustrating an example of a method of operating a display device according to the presence or absence of a UI according to an embodiment of the present disclosure.

The display 180 may display a menu 600, a first thumbnail 601, a second thumbnail 602, and the like when a specific application is executed. However, this is only an example. That is, some of the menu 600, the first thumbnail 601, and the second thumbnail 602 may be omitted or another UI may be further displayed on the screen of the display 180 according to an executed application.

Also, the controller 170 may analyze whether a UI exists on the screen of the display 180 regardless of whether the application is executed.

Since the screen of the display 180 includes a UI such as the menu 600, the first thumbnail 601, and the second thumbnail 602, the controller 170 may display the pointer 205.

The user may move the pointer 205 by operating the remote controller 200.

The controller 170 may receive a selection command of the first thumbnail 601 through the pointer 205, and in this case, the controller 170 may reproduce an image corresponding to the first thumbnail 601. The controller 170 may control the display 180 to display an image 701 corresponding to the first thumbnail 601.

The controller 170 may reproduce the image 701 corresponding to the first thumbnail 601 and determine whether a UI exists on the screen of the display 180. In the example of FIG. 7, since a UI does not exist on the screen of the display 180, the controller 170 may control the display 180 not to display the pointer 205.

That is, the controller 170 may immediately remove the pointer 205 after the image 701 starts to be reproduced. Accordingly, since the pointer 205 does not cover the image 701, the user is not disturbed in viewing the image due to the pointer 205.

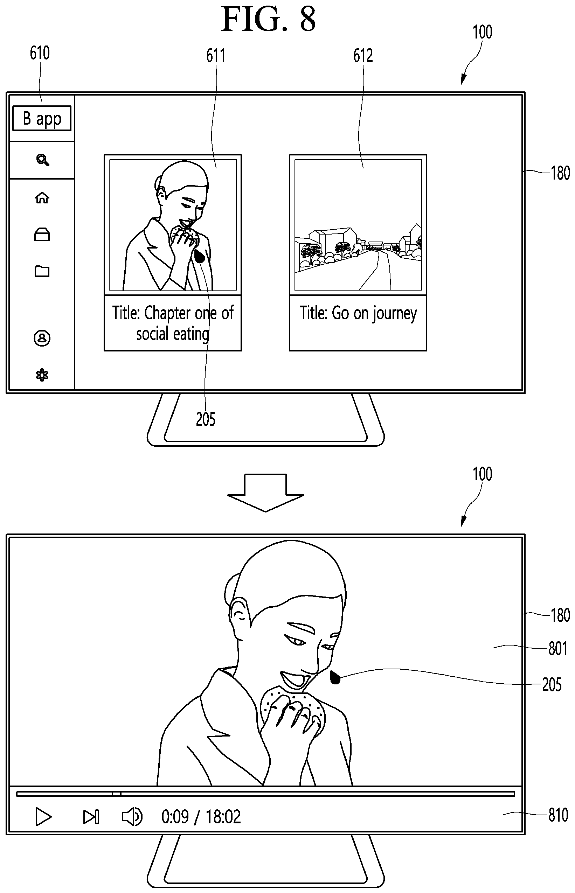

FIG. 8 is an exemplary view illustrating another example of a method of operating a display device according to the presence or absence of a UI according to an embodiment of the present disclosure.

The display 180 may display a menu 610, a first thumbnail 611, a second thumbnail 612, and the like when a specific application is executed. Similar to the case described above with reference to FIG. 7, some of the menu 610 and the first and second thumbnails 611 and 612 may be omitted or another UI may be further displayed on the screen of the display 180 depending on an executed application.

Also, the controller 170 may analyze whether a UI exists on the screen of the display 180 irrespective of whether the application is executed.

When a UI such as the menu 610, the first thumbnail 611, or the second thumbnail 612 is displayed on the screen of the display 180, the controller 170 may display the pointer 20.

The user may move the pointer 205 by operating the remote controller 200, and the controller 170 may receive a selection command of the first thumbnail 611 through the pointer 205.

In response to receiving the selection command of the first thumbnail 611, the controller 170 may reproduce an image corresponding to the first thumbnail 611, and accordingly, control the display 180 to display an image 801 corresponding to the first thumbnail 611.

The controller 170 may reproduce the image 801 corresponding to the first thumbnail 611 and determine whether a UI exists on the screen of the display 180. As shown in the example of FIG. 8, the display 180 may display a UI such as a reproduction guide bar 810 together with the reproduced image 801.

In FIG. 8, the reproduction guide bar 810 is shown as an example of a UI displayed when an image is reproduced, but this is only an example. That is, a type, location, or number of the UI displayed when an image is reproduced may vary.

Since the UI exists on the screen of the display 180, the controller 170 may control the display 180 to display the pointer 205.

As such, after the image 801 starts to be reproduced, when a UI exists, the controller 170 may display the pointer 205, so that the user may easily use the UI displayed on the screen.

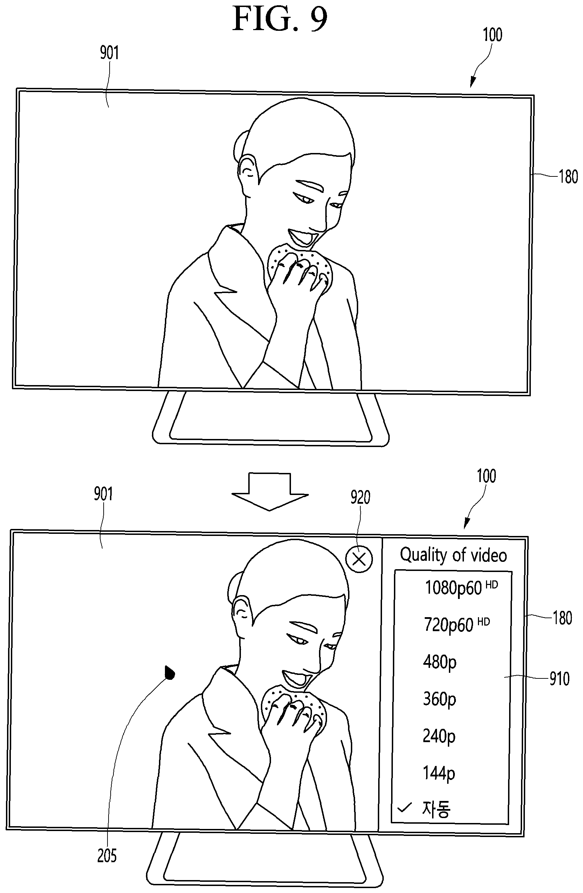

FIG. 9 is an exemplary diagram illustrating another example of a method of operating a display device according to the presence or absence of a UI according to an embodiment of the present disclosure.

When an image is input, the controller 170 may control the display 180 to display an input image 901. In this case, the input image 901 may correspond to an image input through the broadcast reception module 130, an image input through the external device interface 135, and the like. That is, the present disclosure is not limited to the type of the input image.

If a UI does not exist while the input image 901 is displayed, the controller 170 may control the display 180 not to display the pointer 205.

Meanwhile, the controller 170 may display a UI for reasons such as receiving a control signal of the pointer 205. For example, the UI may include a video quality selection menu 910 and an end icon 920, but this is only an example and is not limited thereto.

When the UI is not displayed and then displayed, the controller 170 may control the display 180 to display the pointer 205.

As described above, by displaying the pointer 205 according to whether a UI exists, the controller 170 may minimize the case in which the user viewing an image is disturbed, and may provide the pointer 205 when the user needs it.

Next, FIG. 10 is a flowchart illustrating a method of analyzing whether a UI exists by the display device according to the first embodiment of the present disclosure.

FIG. 10 may be a flowchart embodying an example of a method of performing step S13 of FIG. 6.

The controller 170 may obtain a first image obtained by capturing a video region (S101).

In this case, the video region may refer to a reproduced image region. The video region may be a region output by a decoded image signal which has been processed by the image processing unit 320. The video region may refer to an image region except for a portion output by an OSD signal.

Accordingly, the first image may be an image in which only the reproduced image portion is captured.

The controller 170 may acquire a second image obtained by capturing the screen of the display 180 (S102).

The second image may refer to an image region output by mixing an image signal output from the image processing unit 320 and an OSD signal output from the OSD generation unit 340. The second image may be an image obtained by capturing the entire screen of the display 180.

The controller 170 may compare the first image and the second image (S105).

The controller 170 may compare the first image and the second image to obtain whether the first image and the second image match.

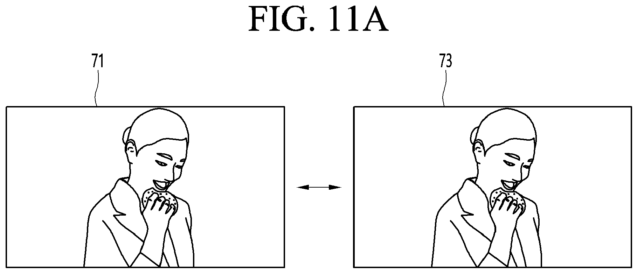

Next, FIGS. 11A to 11B are exemplary views illustrating a method of comparing the first image and the second image by the display device according to an embodiment of the present disclosure.

Referring to FIG. 11A, the first image 71 may be a video region captured by the controller 170 while reproducing the image 701 as shown in FIG. 7, and the second image 73 may be a screen of the display 180 captured by the controller 170, while reproducing the image 701 as shown in FIG. 7.

According to the example of FIG. 11A, the controller 170 may determine that the first image 71 and the second image 73 match.

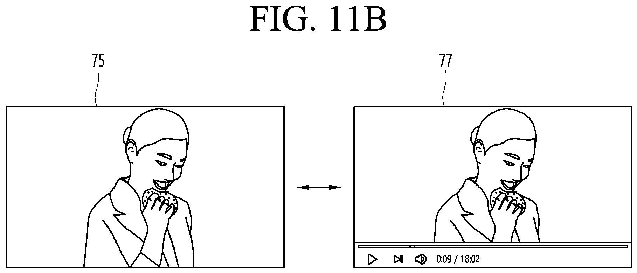

Meanwhile, referring to FIG. 11B, a first image 75 may be a video region captured by the controller 170 while reproducing the image 801 as shown in FIG. 8, and a second image 77 may be a screen of the display 180 captured by the controller 170, while reproducing the image 801 as shown in FIG. 8.

According to the example of FIG. 11B, the controller 170 may determine that the first image 75 and the second image 77 do not match. That is, the controller 170 may determine that the first image 75 and the second image 77 are different.

Again, FIG. 10 will be described.

The controller 170 may determine whether the first image and the second image match based on a comparison result of the first image and the second image (S107).

That is, the controller 170 may acquire whether a UI exists based on the comparison result of the first image and the second image.

If the first image and the second image match, the controller 170 may determine that a UI does not exist (S109), and if the first image and the second image do not match, the controller 170 may determine that a UI exists (S111).

If the first image and the second image are the same, the controller 170 may determine that a UI does not exist, and if the first image and the second image are different, the controller 170 may determine that a UI exists.

As described above, according to the first embodiment of the present disclosure, the controller 170 may quickly acquire whether a UI exists by capturing and comparing the first image and the second image. In addition, when the first image and the second image are different, since it means that information other than the input image is displayed, whether a UI exists may be more accurately obtained according to the first embodiment.

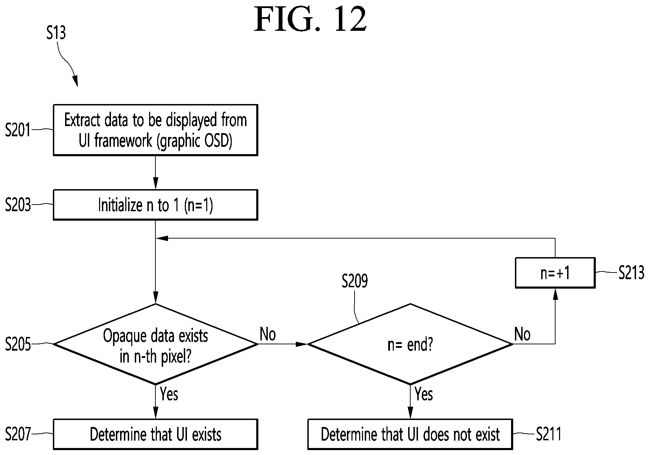

FIG. 12 is a flowchart illustrating a method of analyzing whether a UI exists by a display device according to a second embodiment of the present disclosure.

FIG. 12 may be a flowchart embodying another example of a method of performing step S13 of FIG. 6.

According to the second embodiment of the present disclosure, the controller 170 may obtain whether a UI exists by extracting data of a graphic layer region positioned above an image layer.

The controller 170 may extract data to be displayed in a UI framework (graphic OSD) (S201).

The framework refers to providing classes in a collaborative form to enable reuse of design and implementation corresponding to specific parts of software. The framework may provide interfaces for file control, window control, image processing, text control, and the like. Examples of the framework may include OpenGL, Metal, Vulcan, and the like.

A UI framework may include data for processing a UI.

The controller 170 may extract data to be displayed from the UI framework.

The data to be displayed in the UI framework may refer to pixel data.

Meanwhile, the graphic OSD may refer to a part corresponding to graphic of the OSD signal and may include data of the UI framework to be displayed.

That is, the controller 170 may extract data of the OSD signal generated to be displayed on the display 180, and may obtain whether a UI exists based on the OSD signal.

The controller 170 may initialize n to 1(n=1) (S203).

The controller 170 may determine whether each of pixel data extracted from the UI framework includes opaque data. To this end, the controller 170 may acquire whether opaque data exists from first pixel data to the last pixel data. The controller 170 may initialize n to 1 in order to analyze the first pixel data.

The controller 170 may determine whether opaque data exists in an n-th pixel (S205).

That is, the controller 170 may first determine whether opaque data exists in the first pixel.

Opaque data may be different depending on an expression method of pixel data. For example, when the pixel data is in the RGBA format, the opaque data may be data in which a value A is not 0. When the value A is 0, it means that the corresponding pixel is transparent. Accordingly, in this case, the controller 170 determines that opaque data exists when the value A of the n-th pixel is not 0, and determines that opaque data does not exist when the value A of the n-th pixel is 0.

When opaque data exists in the n-th pixel, the controller 170 may determine that a UI exists (S207).

Meanwhile, if there is no opaque data in the n-th pixel, the controller 170 may determine whether n is the end (S209).

Here, the end may refer to the last pixel. The last may refer to the number of pixels constituting the panel 210. For example, the end may be 8,294,400 which is 3,840×2,160.

When n is the last (end), the controller 170 may consider that opaque data does not exist in all pixels constituting the panel 210, and thus may determine that a UI does not exist (S211).

However, when n is not the end, the controller 170 may determine that pixels for which the existence of opaque data has not yet been analyzed remain. Accordingly, when n is not the end, the controller 170 may change a next value of n to determine whether opaque data exists in a next pixel.

When n is not the end (end), the controller 170 may set n to n+1 (S213) and perform the operation of step S205. That is, when n is not the end, the controller 170 may change n to a next n, and then determine whether opaque data exists in the changed n-th pixel.

For example, if opaque data does not exist in the first pixel, the controller 170 may determine whether opaque data exists in the second pixel, and if opaque data does not exist in the second pixel, the controller may determine whether opaque data exists in the third pixel, and in this manner, the controller 170 may determine whether opaque data exists in the last pixel.

That is, the controller 170 determines that a UI does not exist when data of all pixels in the OSD signal has a transparent value, and when data of at least one pixel in the OSD signal does not have a transparent value, the controller 170 may determine that a UI exists.

As described above, according to the second embodiment, the controller 170 determines that a UI does not exist if there is no opaque data in the data extracted from the UI framework, and thus, the controller 170 may control the display 180 not to display the pointer 205. That is, there is an advantage in that the existence of the UI may be determined based on whether a UI is actually drawn.

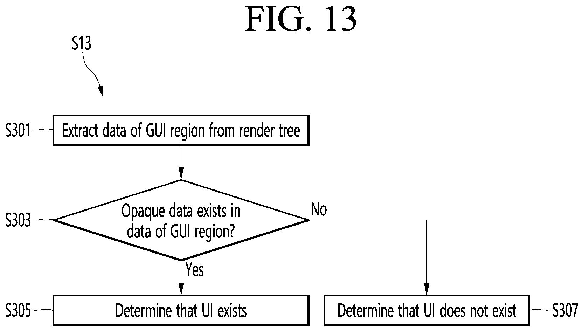

FIG. 13 is a flowchart illustrating a method of analyzing whether a UI exists by a display device according to a third embodiment of the present disclosure.

FIG. 13 may be a flowchart embodying another example of a method of performing step S13 of FIG. 6.

According to the third embodiment of the present disclosure, the controller 170 may acquire whether a UI exists by analyzing a web language. The third embodiment may be applied when an executed application is a web application.

The controller 170 may extract data of a GUI region from a render tree (S301).

The render tree may refer to data including nodes displayed on a screen, and a GUI region may refer to a graphic UI.

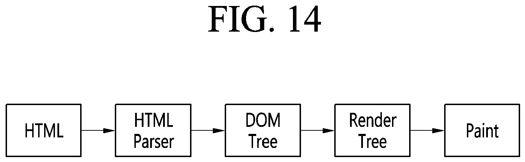

Next, the render tree will be described with reference to FIG. 14. FIG. 14 is a block diagram illustrating a method for expressing a web page through HTML by a display device according to an embodiment of the present disclosure.

HTML (Hyper Text Markup Language) may be a web language. Upon receiving the HTML, the controller 170 may parse an HTML tag through an HTML parser to construct a DOM tree. The DOM is an expression of data, including nodes corresponding to all HTML tags. The controller 170 may obtain a render tree by extracting only a node output on the screen from the DOM tree and calculating a layout of an element to be output on the screen based on the obtained render tree, thereby performing painting to draw pixels on the screen.

That is, the render tree may include the contents and style information of all elements to be output on the screen. Accordingly, the controller 170 may obtain whether a UI exists by extracting data of the GUI region from the render tree.

Specifically, referring to FIG. 13, the controller 170 may determine whether opaque data exists in the data of the GUI region (S303), and if opaque data exists in the data of the GUI region, the controller 170 may determine that a UI exists (S305), and if there is no opaque data in the data of the GUI region, the controller 170 may determine that a UI does not exist (S307).

That is, the controller 170 may obtain the render tree, extract data of the GUI region from the render tree, and then obtain whether a UI exists based on the data of the GUI region.

A method of obtaining whether opaque data exists is the same as described above with reference to FIG. 12.

As described above, according to the third embodiment, the controller 170 may obtain a render tree when the web application is executed, and may obtain whether a UI exists based on the render tree.

Meanwhile, the first to third embodiments described above are merely examples. That is, the controller 170 may determine whether a UI exists on the screen in various ways.

Also, according to an embodiment, the controller 170 may determine whether a UI exists on the screen by sequentially performing the first to third embodiments. For example, the controller 170 may acquire whether a UI exists according to the first embodiment, and if the controller 170 fails to acquire whether a UI exists according to the first embodiment, the controller 170 may acquire whether a UI exists according to the second embodiment. If the controller 170 fails to acquire whether a UI exists according to the second embodiment, the controller may acquire whether a UI exists according to the third embodiment.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical spirit of the present disclosure but to illustrate the technical idea of the present disclosure, and the technical spirit of the present disclosure is not limited by these embodiments.

The scope of protection of the present disclosure should be interpreted by the appending claims, and all technical ideas within the scope of equivalents should be construed as falling within the scope of the present disclosure.

## Claims

1. A display device comprising:
a display configured to display a pointer;
a user input interface configured to receive a control signal of the pointer; and
a controller configured to determine whether a UI (User Interface) exists on a screen of the display, and to control the display not to display the pointer when the UI does not exist.

2. The display device of claim 1, wherein
the controller is configured to control the display to display the pointer when the UI exists.

3. The display device of claim 2, wherein
the controller is configured to control the display not to display the pointer when the UI exists and a time for which the pointer is displayed without movement exceeds a set time.

4. The display device of claim 3, wherein
the controller is configured to count the time for which the pointer is displayed without movement when the UI exists.

5. The display device of claim 1, wherein
the controller is configured to periodically determine whether the UI exists in a state in which the pointer is not displayed, and to control the display to display the pointer when the UI exists.

6. The display device of claim 1, wherein
the controller is configured to control the display to display the pointer when a control signal of the pointer is received in a state in which the pointer is not displayed because the UI does not exist.

7. The display device of claim 1, wherein
the controller is configured to control the display to selectively display the pointer according to whether the UI exists while an input image is being produced.

8. The display device of claim 7, wherein
the controller is configured to control the display to display the pointer when reproducing of the input image is stopped in a state in which the UI does not exists so the pointer is not displayed, while the input image is being reproduced.

9. The display device of claim 1, wherein
the controller is configured to acquire a first image obtained by capturing a video region and a second image obtained by capturing a screen of the display and to acquire whether the UI exists based on a result of comparing the first image and the second image.

10. The display device of claim 9, wherein
the controller is configured to determine that the UI does not exist when the first image and the second image are the same, and to determine that the UI exists when the first image and the second image are different.

11. The display device of claim 1, wherein
the controller is configured to extract data of an OSD signal generated to be displayed on the display and to acquire whether the UI exists based on the OSD signal.

12. The display device of claim 11, wherein
the controller is configured to determine that the UI does not exist when data of all pixels in the OSD signal has a transparent value, and to determine that the UI exists when data of at least one of the pixels in the OSD signal does not have a transparent value.

13. The display device of claim 1, wherein
the controller is configured to acquire a render tree, to extract data of a GUI region from the render tree, and to acquire whether the UI exists based on the data of the GUI region.

14. The display device of claim 13, wherein
the controller is configured to determine that the UI does not exist when opaque data is not present in the data of the GUI region, and to determine that the UI exists when opaque data is present in the data of the GUI region.

15. The display device of claim 13, wherein
the controller is configured to acquire the render tree when a web application is run, and to acquire whether the UI exists based on the render tree.
